# FASCICULE DE BREVET EUROPEEN

(11) **EP 0 743 123 B1**
(45) Date de publication et mention de la délivrance du brevet: **02.09.1998**
(21) Numéro de dépôt: 96107600.7
(22) Date de dépôt: 13.05.1996
(51) Int. Cl.: B23K 1/00, B21C 37/06, B21C 37/10

(54) **Boîte à fluide d'échangeur de chaleur et procédé pour sa réalisation**
Wärmetauscherflüssigkeitskasten und Verfahren zu dessen Herstellung
Fluid box of an heat exchanger and method for producing the same

(30) Priorité: 18.05.1995 FR 9505934
(43) Date de publication de la demande: 20.11.1996
(73) Titulaire: VALEO THERMIQUE MOTEUR, 78320 Le Mesnil Saint-Denis (FR)
(72) Inventeur: Le Gauyer, Philippe, 75019 Paris (FR)
(74) Mandataire: Gamonal, Didier

(56) Documents cités:
- EP-A- 0 351 938
- DE-A- 2 741 717
- DE-C- 95 361
- GB-A- 2 257 062
- US-A- 1 504 464
- US-A- 2 317 198

## Description

L'invention concerne une boîte à fluide d'échangeur de chaleur comportant une paroi tubulaire constituée par une tôle roulée sous forme d'un cylindre de façon que deux bords opposés de celle-ci viennent en regard l'une de l'autre par leurs tranches, lesdits bords étant reliées entre eux de façon étanche et solidarisés par un matériau de brasage, la paroi présentant des ouvertures alignées selon une génératrice diamétralement opposée aux bords pour le passage de tubes de circulation de fluide de l'échangeur de chaleur.

L'invention concerne également un procédé pour réaliser une telle boîte à fluide dans lequel on roule une tôle sous forme d'un cylindre de façon que deux bords opposés de celle-ci viennent en regard l'un de l'autre par leurs tranches en n'étant séparés que par un jeu ne dépassent pas quelques centième de millimètre, et on fait fondre un matériau de brasage pour combler de façon étanche ledit jeu et solidariser les bords entre eux.

Une telle boîte à fluide et un tel procédé sont décrits dans EP-A-0 351 938, pour la réalisation de la paroi latérale tubulaire d'une boîte à fluide d'échangeur de chaleur. Dans ce procédé connu, les deux bords opposés sont rectilignes et peuvent s'écarter localement l'un de l'autre dans la direction circonférentielle, par suite d'une déformation de la tôle engendrée par la chaleur du brasage. Des dispositions particulières sont prévues dans le document précité, par exemple une découpe en biseau des bords, pour permettre la liaison par brasage de ceux-ci malgré une telle déformation.

Il est cependant préférable, tant pour l'aspect de la paroi terminée que pour la fiabilité de la brasure, d'empêcher cette déformation plutôt que de limiter ses conséquences.

Il est connu par le document DE-C-95361 un procédé de réalisation d'un tube avec une paroi tubulaire constituée par une tôle roulée sous forme d'un cylindre de façon que deux bords opposés de celle-ci viennent en regard d'un de l'autre par leurs tranches, lesdits bords étant reliés entre eux et solidarisés par un matériau de brasage.

Dans ce document, la liaison entre les bords est effectuée par enfoncement circonférentiel d'un bord présentant un tracé non rectiligne avec l'autre bord présentant un tracé non rectiligne complémentaire de façon à ce que les deux bords soient déformés axialement pour être verrouillés l'un avec l'autre.

Il est décrit dans le document US-A-2 317 198, un procédé pour réaliser une paroi tubulaire dans lequel on roule une tôle sous forme d'un cylindre de façon que deux bords opposés de celle-ci viennent en regard l'un de l'autre par leurs tranches, ces bords présentant des tracés non rectilignes mutuellement conjugués.

Par ce procédé, les deux bords sont reliés mécaniquement l'un à l'autre et, pour réaliser les ouvertures des passages de tubes, il est nécessaire d'effectuer une opération de poinçonnage ou de sciage.

Dans le document GB-A-2 257 062, le procédé décrit concerne la réalisation d'un tube dans lequel chaque bord crénelé va pénétrer dans des ouvertures prévues au voisinage du bord opposé en recouvrant ce bord opposé.

Le but de la présente invention est de résoudre les inconvénients énumérés.

L'invention a pour objet une boîte à fluide d'échangeur de chaleur comportant une paroi tubulaire constituée par une tôle roulée sous forme d'un cylindre de façon que deux bords opposés de celle-ci viennent en regard l'un de l'autre par leurs tranches, lesdits bords étant reliés entre eux de façon étanche et solidarisés par un matériau de brasage, la paroi présentant des ouvertures alignés selon une génératrice diamétralement opposée aux bords pour le passage de tubes de circulation de fluide de l'échangeur de chaleur, caractérisé en ce que lesdits bords présentent des tracés rectilignes mutuellement conjugués définissant des contre-dépouilles propres à assurer un verrouillage mutuel des bords dans la direction circonférentielle.

Des caractéristiques optionnelles de l'invention, complémentaires ou alternatives, sont énoncées ci-après :
- Les deux bords présentent respectivement des saillies et des évidements propres à recevoir les saillies.
- Chaque saillie ou chaque évidement présente un col se raccordant à une tête, la tête étant tournée vers l'extérieur de la tôle par rapport au col dans le cas d'une saillie et vers l'intérieur de la tôle par rapport au col dans le cas d'un évidement et s'étendant au-delà du col, dans un sens et dans l'autre, dans la direction longitudinale du bord.
- Les saillies et les évidements occupent une fraction minoritaire de la longueur des bords, ceux-ci étant rectilignes sur la fraction restante de leur longueur.

Plusieurs saillies ou évidements sont répartis le long d'un bord, à des distance mutuelles ne dépassant pas 60mm environ.

L'invention vise également un procédé pour réaliser une boîte à fluide d'échangeur de chaleur telle que définie précédemment, procédé caractérisé en ce que
a) on ménage dans les bords de la tôle des tracés non rectilignes mutuellement conjugués définissant des contre-dépouilles propres à assurer un verrouillage mutuel des bords dans la direction circonférentielle ;
b) on incurve la tôle dans une bande située sensiblement à mi-distance desdits bords ;
c) on pratique dans la bande médiane incurvée des ouvertures pour le passage de tubes de circulation de fluide destinés à être reliés à la boîte à fluide ; et
d) on poursuit le roulage de la tôle de façon que lesdits bords viennent se raccorder mutuellement en une zone de la paroi tubulaire sensiblement diamétralement opposée auxdits ouvertures.

Selon l'invention, pour réaliser l'étape a) on ménage des saillies le long d'un bord et en regard de chaque saillie des évidements le long du bord opposé.

Selon une autre caractéristique, la tôle est roulée de façon à amener les régions rectilignes du bord muni de saillies en coïncidence avec les régions rectilignes du bord muni d'évidements les saillies s'étendant sensiblement tangentiellement à l'extérieur du cylindre, et qu'on presse ensuite les saillies radialement pour les introduire dans les évidements.

Selon une autre caractéristique, ledit matériau de brasage est disposé en tant que revêtement sur l'un au moins des faces de la tôle, avant de rouler celle-ci en cylindre.

Les caractéristiques et avantages de l'invention seront exposés plus en détail dans la description ci-après, en se référant aux dessins annexés, sur lesquels :
- la figure 1 est une vue de dessus d'une paroi tubulaire de boîte à fluide selon l'invention ;
- la figure 2 est une vue de dessus d'une tôle plate utilisée pour réaliser la paroi de la figure 1 ;
- la figure 3 est un détail agrandi de la figure 2 ;
- la figure 4 est une vue partielle en coupe transversale relative à un autre étape du procédé.

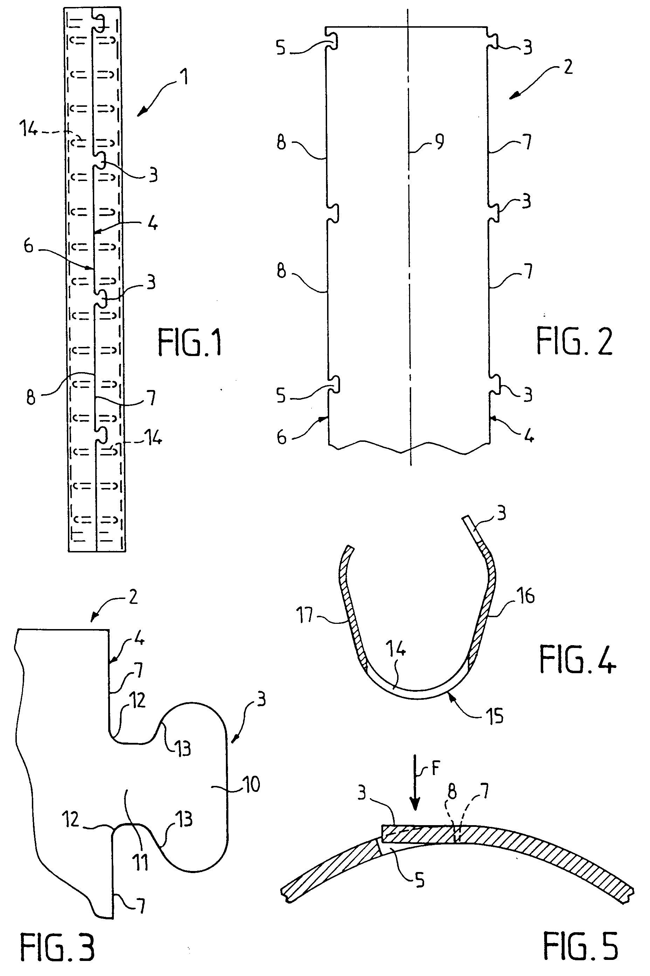

La figure 1 représente une paroi latérale tubulaire 1 pour une boîte à fluide d'échangeur de chaleur, ayant la même forme générale que celle décrite dans EP-A-0 351 938. Cette paroi tubulaire est obtenue à partir d'une tôle métallique plate 2 de forme générale rectangulaire illustrée à la figure 2. Des saillies 3 sont ménagées, à des distances mutuelles de l'ordre de 60 mm, le long d'un bord longitudinal 4 de la tôle 2. En regard de chaque saillie 3 est ménagé un évidement 5 dans le côté longitudinal 6 opposé au côté 4. Les saillies 3 sont reliées entre elles par des portions de bord 7 s'étendant selon une même ligne droite parallèle à la direction générale des côtés 4 et 6. Il en est de même pour les portions de bord 8 reliant les évidements 5. Les saillies 3 ont une forme conjuguée de celle des évidements 5 de façon à se loger dans ceux-ci, avec un jeu ne dépassant pas quelques centièmes de millimètre, lorsque la tôle est roulée autour d'un axe 9 pour amener les portions de bord 7 en coïncidence avec les portions de bord 8, comme montré à la figure 1.

La forme commune aux saillies 3 et aux évidements 5 est illustrée à la figure 3, qui représente plus particulièrement une saillie 3. Celle-ci est composée d'une tête 10 et d'un col 11 qui relie la tête au reste de la tôle en se raccordant directement aux portions de bord rectilignes 7 par des arrondis 12. La tête 10 s'étend au-delà du col 11 dans la direction longitudinale du bord 4, aussi bien dans un sens que dans l'autre (vers le haut et vers le bas de la figure 3). La forme de la saillie 3 est donc semblable à celle d'une queue d'aronde, et présente des contre-dépouilles 13, mais est dépourvue d'angles vifs.

On voit à la figure 1 que des ouvertures 14 traversant la paroi 1 sont prévues pour le passage de tubes de circulation de fluide de l'échangeur de chaleur. Ces ouvertures 14 sont alignées selon une génératrice diamétralement opposée aux portions de bords 7 et 8. Elles sont avantageusement réalisées par poinçonnage alors que, comme on le voit à la figure 4, la région correspondante 15 de la tôle est déjà incurvée selon le rayon de la paroi tubulaire définitive, les régions adjacentes 16 et 17 s'étendant selon des plans tangents à la région incurvée 15.

Enfin, la figure 5 montre la tôle lorsqu'elle a été roulée, au moyen d'un poinçon approprié, sur toute sa surface comprise entre les lignes droites contenant les portions de bords 7 et 8, les saillies 3 s'étendant tangentiellement par rapport au cylindre ainsi formé, à partir des portions 7. Les saillies 3 se trouvent donc en partie radialement à l'extérieur du cylindre et des évidements 5. Une pression exercée par un poinçon selon la flèche F sur les saillies permet de ramener la totalité de celles-ci à l'intérieur des évidements.

Comme connu en soi, les bords 4 et 6 sont ensuite reliés entre eux de façon étanche par la fusion d'un matériau de brasage qui recouvrait l'une au moins des faces de la tôle 2 avant roulage. Dans le cas de l'invention, ce matériau de brasage remplit aussi bien les jeux entre les saillies 3 et les évidements 5 que ceux entre les portions rectilignes 7 et 8.

Le roulage de la tôle peut être réalisé à l'aide de tous outillages connus.

## Revendications

1. Boîte à fluide d'échangeur de chaleur comportant une paroi tubulaire (1) constituée par une tôle (2) roulée sous forme d'un cylindre de façon que deux bords opposés (4, 6) de celle-ci viennent en regard l'un de l'autre par leurs tranches, lesdits bords étant reliés entre eux de façon étanche et solidarisés par un matériau de brasage, la paroi (1) présentant des ouvertures (14) alignées selon une génératrice diamétralement opposée aux bords (4,6) pour le passage de tubes de circulation de fluide de l'échangeur de chaleur, caractérisée en ce que lesdits bords présentent des tracés non rectilignes mutuellement conjugués définissant des contre-dépouilles (13) propres à assurer un verrouillage mutuel des bords dans la direction circonférentielle.

2. Boîte à fluide d'échangeur de chaleur selon la revendication 1, caractérisée en ce que les deux bords présentent respectivement des saillies (3) et des évidements (5) propres à recevoir les saillies.

3. Boîte à fluide d'échangeur de chaleur selon la revendication 2, caractérisée en ce que chaque saillie ou chaque évidement présente un col (11) se raccordant à une tête (10), la tête étant tournée vers l'extérieur de la tôle par rapport au col dans le cas d'une saillie et vers l'intérieur de la tôle par rapport au col dans le cas d'un évidement et s'étendant au-delà du col, dans un sens et dans l'autre, dans la direction longitudinale du bord.

4. Boîte à fluide d'échangeur de chaleur selon l'une des revendications 2 et 3, caractérisée en ce que les saillies et les évidements occupent une fraction minoritaire de la longueur des bords (4, 6), ceux-ci étant rectilignes sur la fraction restante de leur longueur.

5. Boîte à fluide d'échangeur de chaleur selon la revendication 4, caractérisée en ce que plusieurs saillies ou évidements sont répartis le long d'un bord, à des distances mutuelles ne dépassant pas 60 mm environ.

6. Procédé pour réaliser une boite à fluide d'échangeur de chaleur selon l'une des revendications 1 à 5, caractérisé en ce que :
a) on ménage dans les bords (4,6) de la tôle (2) des tracés non rectilignes mutuellement conjugués définissant des contre-dépouilles (13) propres assurer un verrouillage mutuel des bords dans la direction circonférentielle;
b) on incurve la tôle dans une bande (15) située sensiblement à mi-distance desdits bords (4, 6);
c) on pratique dans la bande médiane incurvée des ouvertures (14) pour le passage de tubes de circulation de fluide destinés à être reliés à la boîte à fluide; et
d) on poursuit le roulage de la tôle de façon que lesdits bords viennent se raccorder mutuellement en une zone de la paroi tubulaire sensiblement diamétralement opposée auxdites ouvertures.

7. Procédé selon la revendication 6, caractérisée en ce que pour réaliser l'étape a) on ménage des saillies (3) le long d'un bord (4) et en regard de chaque saillie (3) des évidements(5) le long du bord opposé (6).

8. Procédé selon la revendication 7, caractérisé en ce que la tôle est roulée de façon à amener les régions rectilignes (7) du bord (4) muni de saillies (3) en coïncidence avec les régions rectilignes (8) du bord (6) muni d'évidements (5) les saillies s'étendant sensiblement tangentiellement à l'extérieur du cylindre, et qu'on presse ensuite les saillies radialement pour les introduire dans les évidements.

9. Procédé selon l'une des revendications 6 à 8, caractérisé en ce que ledit matériau de brasage est disposé en tant que revêtement sur l'une au moins des faces de la tôle, avant de rouler celle-ci en cylindre.

## Claims

1. A fluid header for a heat exchanger, comprising a tubular wall (1) formed from a blank (2) rolled into the form of a cylinder such that two opposed sides (4, 6) of the latter are brought into edgewise facing relationship with each other, the said sides being joined together sealingly and secured by a brazing material, the wall (1) having apertures (14) aligned on a generatrix diametrically opposed to the sides (4, 6) for the passage through them of fluid flow tubes of the heat exchanger, characterised in that the said sides have non-rectilinear profile portions which are conjugate to each other and which define reliefs (13) adapted to lock the sides together in the circumferential direction.

2. A fluid header for a heat exchanger according to Claim 1, characterised in that the two sides have projections (3) and notches (5) for receiving the projections, respectively.

3. A fluid header for a heat exchanger according to Claim 2, characterised in that each projection or each notch has a neck (11) joined to a head (10), the head being directed outwardly from the blank with respect to the neck in the case of a projection, and inwardly of the blank with respect to the neck in the case of a notch, and extending beyond the neck in both directions in the longitudinal direction of the side.

4. A fluid header for a heat exchanger according to Claim 2 or Claim 3, characterised in that the projections and the notches occupy a minor fraction of the length of the sides (4, 6), the latter being rectilinear over the remaining fraction of their length.

5. A fluid header for a heat exchanger according to Claim 4, characterised in that a plurality of projections or notches are spaced along a side, at distances from each other not exceeding about 60 mm.

6. A method of making a fluid header for a heat exchanger according to one of Claims 1 to 5, characterised in that:
(a) non-rectilinear profile portions, conjugate to each other and defining reliefs (13), are formed in the sides (4, 6) of the blank (2) in such a way as to ensure mutual locking of the sides in the circumferential direction;
(b) the blank is curved in a band (15) lying substantially half-way between the said sides (4, 6);
(c) apertures (14) are formed in the curved median band for the passage through them of tubes for fluid flow arranged to be connected to the fluid header; and
(d) the operation of rolling the blank is continued in such a way that the said sides come into mutual engagement in a zone of the tubular wall which is substantially diametrically opposed to the said apertures.

7. A method according to Claim 6, characterised in that, to perform step (a), projections (3) are formed along one side (4), and notches (5) are formed along the opposite side (6) in alignment with each projection (3).

8. A method according to Claim 7, characterised in that the blank is rolled in such a way as to bring the rectilinear regions (7) of the side (4) having projections (3) into coincidence with the rectilinear regions (8) of the side (6) having notches (5), with the projections extending substantially tangentially on the outside of the cylinder, and in that the projections are subsequently pressed radially so as to introduce them into the notches.

9. A method according to one of Claims 6 to 8, characterised in that the said brazing material is disposed as a coating on at least one of the faces of the blank before the latter is rolled into a cylinder.

## Patentansprüche

1. Wärmetauscherflüssigkeitskasten, der eine rohrförmige Wand (1) umfaßt, die aus einem rundgebogenen Blech (2) in Form eines Zylinders besteht, so daß zwei entgegengesetzte Ränder (4, 6) dieses Blechs einander mit ihren Kanten gegenüberliegen, wobei die besagten Ränder durch einen Lötwerkstoff dicht und fest miteinander verbunden sind und wobei die Wand (1) Öffnungen (14), die entlang einer den Rändern (4, 6) diametral gegenüberliegenden Erzeugenden ausgerichtet sind, für den Durchgang von Flüssigkeitsumlaufrohren des Wärmetauschers aufweist, **dadurch gekennzeichnet,** daß die besagten Ränder einander zugeordnete nicht geradlinige Verläufe aufweisen, die Hinterschneidungen (13) definieren, die eine wechselseitige Sicherung der Ränder in Umfangsrichtung gewährleisten können.

2. Wärmetauscherflüssigkeitskasten nach Anspruch 1, **dadurch gekennzeichnet,** daß die beiden Ränder Vorsprünge (3) bzw. Aussparungen (5) zur Aufnahme der Vorsprünge aufweisen.

3. Wärmetauscherflüssigkeitskasten nach Anspruch 2, **dadurch gekennzeichnet,** daß jeder Vorsprung oder jede Aufnahme einen Hals (11) aufweist, der sich an einen Kopf (10) anschließt, wobei der Kopf im Falle eines Vorsprungs im Verhältnis zum Hals zur Außenseite des Blechs und im Falle einer Aussparung im Verhältnis zum Hals zur Innenseite des Blechs gerichtet ist und sich in der einen und der anderen Richtung über den Hals hinaus in der Längsrichtung des Rands erstreckt.

4. Wärmetauscherflüssigkeitskasten nach einem der Ansprüche 2 und 3, **dadurch gekennzeichnet,** daß die Vorsprünge und die Aufnahmen einen unterhälftigen Teil der Länge der Ränder (4, 6) einnehmen, während diese auf dem restlichen Teil ihrer Länge geradlinig sind.

5. Wärmetauscherflüssigkeitskasten nach Anspruch 4, **dadurch gekennzeichnet,** daß mehrere Vorsprünge oder Aussparungen entlang einem Rand in wechselseitigen Abständen verteilt sind, die etwa 60 mm nicht überschreiten.

6. Verfahren zur Herstellung eines Wärmetauscherflüssigkeitskastens nach einem der Ansprüche 1 bis 5, **dadurch gekennzeichnet,** daß:
a) in die Ränder (4, 6) des Blechs (2) einander zugeordnete nicht geradlinige Verläufe eingearbeitet sind, die Hinterschneidungen (13) definieren, um eine wechselseitige Sicherung der Ränder in Umfangsrichtung zu gewährleisten;
b) das Blech in einem Streifen (15) gebogen wird, der in etwa auf halbem Abstand zu den besagten Rändern (4, 6) angeordnet ist;
c) in den gebogenen mittleren Streifen Öffnungen (14) für den Durchgang von Flüssigkeitsumlaufrohren eingearbeitet werden, die für die Verbindung mit dem Flüssigkeitskasten bestimmt sind;
d) das Rundbiegen des Blechs fortgesetzt wird, so daß sich die besagten Ränder in einem Bereich der rohrförmigen Wand aneinander anschließen, der den besagten Öffnungen in etwa diametral gegenüberliegt.

7. Verfahren nach Anspruch 6 , **dadurch gekennzeichnet,** daß zur Ausführung des Arbeitsgangs a) Vorsprünge (3) entlang einem Rand (4) und gegenüber jedem Vorsprung (3) Aussparungen (5) entlang dem entgegengesetzten Rand (6) ausgebildet werden.

8. Verfahren nach Anspruch 7 , **dadurch gekennzeichnet,** daß das Blech so rundgebogen wird, daß die geradlinigen Bereiche (7) des mit Vorsprüngen (3) versehenen Rands (4) in Übereinstimmung mit den geradlinigen Bereichen (8) des mit Aussparungen (5) versehenen Rands (6) gebracht werden, wobei sich die Vorsprünge in etwa tangential zur Außenseite des Zylinders erstrecken, und daß anschließend die Vorsprünge radial gepreßt werden, um sie in die Aussparungen einzuführen.

9. Verfahren nach einem der Ansprüche 6 bis 8 **, dadurch gekennzeichnet,** daß der besagte Lötwerkstoff als Beschichtung auf mindestens einer der Seiten des Blechs angeordnet wird, bevor dieses zu einem Zylinder rundgebogen wird.
